# EUROPEAN PATENT APPLICATION

(11) **EP 4 810 763 A1**
(43) Date of publication of application: **23.09.2026**
(21) Application number: 26163040.4
(22) Date of filing: 06.03.2026
(51) Int. Cl.: F01D 5/34

(54) **METHODS FOR DETERMINING DYNAMICS FROM BLADED ROTORS**

(30) Priority: 20.03.2025 US 202519085311
(71) Applicant: RTX Corporation, Farmington, CT 06032 (US)
(72) Inventor: OWEN, William D, Windsor, Connecticut, 06095 (US); PHAN, Uyen, East Windsor, Connecticut, 06088 (US); LOMENZO, Richard A Jr, Enfield, Connecticut, 06082 (US); CHIZINSKI, Steven, Rockfall, Connecticut, 06481 (US); KERNOZICKY, Garrett, Mansfield, Connecticut, 06268 (US)
(74) Representative: Dehns

(57) **Abstract**

A method for developing a mistuning model to facilitate dispositions of potential repair blend profiles on damaged blades of a bladed rotor can include collecting a vibration data, the vibration data comprising blade-alone frequency for each of a plurality of blades in the bladed rotor on a gas-turbine engine; compiling the vibration data with vibration data sets across a fleet of gas-turbine engines to generate a vibration fleet data; calculating a system vibration amplitude as a function of frequency shift for each of a plurality of system modes based on the vibration fleet data to generate a frequency shift impact on the system vibration amplitude; and developing, based on the frequency shift impact, the mistuning model, the mistuning model configured to receive a blade-alone frequency parameter as an input perturbation. The developed mistuning model can be used for potential repair blend dispositions.

## Description

### FIELD

The present disclosure generally relates to systems and methods for identifying defects in airfoil surfaces, and more particularly to defect identification systems and methods for bladed rotors in turbine-based engines.

### BACKGROUND

Gas turbine engines (such as those used in electrical power generation or used in modem aircraft) typically include a compressor, a combustor section, and a turbine. The compressor and the turbine typically include a series of alternating rotors and stators. A rotor generally comprises a rotor disk and a plurality of blades. The rotor may be an integrally bladed rotor ("IBR") or a mechanically bladed rotor.

The rotor disk and blades in the IBR are one piece (i.e., integral) with the blades spaced around the circumference of the rotor disk. Conventional IBRs may be formed using a variety of technical methods including integral casting, machining from a solid billet, or by welding or bonding the blades to the rotor disk.

Current system vibration (i.e. mistuning) assessment (i.e., mistuning assessments) using experimental measurements are costly to develop, setup (e.g. manufacturing tooling and related test equipment), and execute through related data acquisition and analysis time. Methods that are more cost and time effective are necessary to meet expected bladed rotor sustainment demands.

### SUMMARY

A method for developing a mistuning model to facilitate dispositions of potential repair blend profiles on damaged blades of a bladed rotor is disclosed herein. In various embodiments, the method comprises: collecting a vibration data, the vibration data comprising blade-alone frequency for each of a plurality of blades in the bladed rotor on a gas-turbine engine; compiling the vibration data with vibration data sets across a fleet of gas-turbine engines to generate a vibration fleet data; calculating a system vibration amplitude as a function of frequency shift for each of a plurality of system modes based on the vibration fleet data to generate a frequency shift impact on the system vibration amplitude; and developing, based on the frequency shift impact, the mistuning model, the mistuning model configured to receive a blade-alone frequency parameter as an input perturbation.

In various embodiments, the vibration data is collected via one or more piezoelectric sensors disposed proximate the bladed rotor.

In various embodiments, a Frequency Resonance Testing (FRT) is performed for each blade in the bladed rotor to generate individual vibration data for each of the plurality of blades in the bladed rotor.

In various embodiments, the compiling the vibration data comprises calculating a normalized frequency for each of the plurality of blades in the bladed rotor relative to an ideal blade. In various embodiments, the normalized frequency for each of the plurality of blades corresponds to a data-based frequency of the respective blade divided by a model-based frequency of the ideal blade.

In various embodiments, responsive to the mistuning model receiving the blade-alone frequency as the input perturbation, the mistuning model generates a predicted frequency shift impact on the system vibration amplitude for each of the plurality of system modes in a modal domain of the bladed rotor.

In various embodiments, the system vibration amplitude as a function of the frequency shift impact for each of the plurality of system modes is calculated for each of the plurality of blades in the bladed rotor. In various embodiments, the vibration fleet data includes a normal distribution of normalized frequency for each of the plurality of blades.

A method for determining whether one or more potential repair blend profiles for a potentially repaired blade on a bladed rotor is acceptable is disclosed herein. In various embodiments, the method comprises: determining, based on a vibration data of the bladed rotor from operation of a gas-turbine engine over numerous flight cycles, a frequency perturbation of a repaired blade model relative to an ideal blade model, the repaired blade model corresponding to the potentially repaired blade; determining a normalized frequency perturbation of the repaired blade model relative to a damaged blade based on a fleet vibration data of a fleet of bladed rotors that include the bladed rotor; performing, via a developed mistuning model, a system vibration assessment of the bladed rotor based on the normalized frequency perturbation; and determining, based on the system vibration assessment, whether the one or more potential repair blend profiles of the potentially repaired blade on the bladed rotor is acceptable.

In various embodiments, prior to the determining the frequency perturbation of the repaired blade model relative to the ideal blade model, the method further comprises: determining the one or more potential repair blend profiles for the damaged blade of the bladed rotor; and performing a modal analysis of the repaired blade model, the repaired blade model include a repair blend feature for each of the one or more potential repair blend profiles.

In various embodiments, the method further comprises determining the one or more potential repair blend profiles for the damaged blade prior to performing the modal analysis.

In various embodiments, the method further comprises generating the repaired blade model for the damaged blade based on the one or more potential repair blend profiles.

In various embodiments, in response to the determining the one or more potential repair blend profiles are acceptable, storing a part variation data in a database for future input into a system vibration model.

In various embodiments, in response to the determining the one or more potential repair blend profiles are acceptable, repairing the damaged blade with the one or more potential repair blend profiles to form a repaired blade corresponding to the repaired blade model.

In various embodiments, the developed mistuning model is developed by: collecting the vibration data, the vibration data comprising blade-alone frequency for each of a plurality of blades in the bladed rotor on the gas-turbine engine; compiling the vibration data with vibration data sets across a fleet of gas-turbine engines to generate a vibration fleet data; calculate a system vibration amplitude as a function of frequency shift for each of a plurality of system modes based on the vibration fleet data to generate a frequency shift impact on the system vibration amplitude; and developing, based on the frequency shift impact, the developed mistuning model, the developed mistuning model configured to receive a blade-alone frequency parameter as an input perturbation.

In various embodiments, the vibration data is collected via one or more piezoelectric sensors disposed proximate the bladed rotor. In various embodiments, a Frequency Resonance Testing (FRT) is performed for each blade in the bladed rotor to generate individual vibration data for each of the plurality of blades in the bladed rotor. In various embodiments, the compiling the vibration data comprises calculating a normalized frequency for each of the plurality of blades in the bladed rotor relative to an ideal blade, and the normalized frequency for each of the plurality of blades corresponds to a data-based frequency of the respective blade divided by a model-based frequency of the ideal blade. In various embodiments, responsive to the developed mistuning model receiving the blade-alone frequency as the input perturbation, the developed mistuning model generates a predicted frequency shift impact on the system vibration amplitude for each of the plurality of system modes in a modal domain of the bladed rotor. In various embodiments, the system vibration amplitude as a function of the frequency shift impact for each of the plurality of system modes is calculated for each of the plurality of blades in the bladed rotor.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a cross-sectional view of a gas-turbine engine, in accordance with various embodiments;
FIG. 1B illustrates a cross-sectional view of a high pressure compressor, in accordance with various embodiments;
FIG. 2 illustrates a front view of a bladed rotor, in accordance with various embodiment;
FIG. 3 illustrates a portion of an inspected bladed rotor, in accordance with various embodiments;
FIG. 4 illustrates a portion of the inspected bladed rotor during repair, in accordance with various embodiments;
FIG. 5A illustrates a portion of a repaired bladed rotor, in accordance with various embodiments;
FIG. 5B illustrates a repair blend profile, in accordance with various embodiments;
FIG. 5C illustrates a repair blend profile, in accordance with various embodiments;
FIG. 5D illustrates a repair blend profile, in accordance with various embodiments;
FIG. 6 illustrates a cross-sectional view of a vibration data collection system, in accordance with various embodiments;
FIG. 7 illustrates a perspective view of a portion of a vibration data collection system, in accordance with various embodiments;
FIG. 8 illustrates a method of determining whether potential repair blend profiles for a blade in a bladed rotor are acceptable;
FIG. 9 illustrates a plot of normalized frequency vs blade number for a rotor stack of a specific bladed rotor, in accordance with various embodiments;
FIG. 10 illustrates a plot of amplification factor as a function of frequency shift as determined from fleet vibration data, in accordance with various embodiments;
FIG. 11 illustrates a plot of normalized frequency vs blade number for a rotor stack of a specific bladed rotor, in accordance with various embodiments with predicted perturbations based on potential repair blend profiles for a damaged blade, in accordance with various embodiments; and
FIG. 12 illustrates a plot of amplification factor as a function of frequency shift as determined from fleet vibration data with a potentially repaired blade plotted thereon, in accordance with various embodiments;.
FIG. 13 illustrates a method of developing a mistuning model, in accordance with various embodiments.
FIG. 14 illustrates a method of using the developed mistuning model, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

Application of Frequency Resonance Testing (FRT) can be utilized to identify small damage on IBRs in gas turbine engines. FRT detects small changes in a part's vibration response. Those changes can be used to identify instances of damage on an IBR. FRT offers a method, based on changes in parts response characteristics, to determine if there is damage on a part. Disclosed herein are systems and methods for using FRT to identify damage on airfoil surfaces resulting from foreign object debris (FOD), with the intent to identify the damage, repair the damage, capture the signature of the repaired part, and use that repair signature to assess the influence of the repair on the parts dynamic response.

In various embodiments, as described further herein, FRT can be utilized to significantly reduce disposition of bladed rotors at maintenance intervals. For example, simplified test equipment (e.g., piezoelectric transducers as described further herein) can be installed on gas-turbine engines either for test engines or for production engines, allowing the frequency response of bladed rotors that define an assembly or system to be captured. While individual component (e.g., airfoils) measurements offer some insight into the change in response of an altered component, accounting for the effects of changes to individual components on a system can help characterize the system's vibratory response with sufficient accuracy to ensure structural integrity. Numerical models can be used to account for changes in individual airfoil response to the full system mistuned response.

Accordingly, disclosed herein is a system and method for continuous improvement of dispositioning and determining repair blends for blades of bladed rotors for entry back into service. In various embodiments, the method comprises collecting initial fleet data for blade specific frequency response, developing mistuning models that accept blade-alone frequency as input perturbations, defining perturbed geometry (e.g., blend repair profiles) that are within the blade-alone frequency response using the developed mistuning models, and continuing to collect blade-alone frequency to update the mistuning model. As described further herein, the methods disclosed herein can significantly reduce IBR repair development and disposition cost and time.

In various embodiments, vibrational testing (for example, FRT) can be used to continuously collect vibration data of a bladed rotor on a gas-turbine engine that has entered service (e.g., throughout a life cycle) or during a testing phase of the gas-turbine engine (e.g., during testing flight cycles). In this regard, in-flight vibration data can be collected and transmitted to a vibration data collection system (e.g., off-board the aircraft). This is a unique application of vibrational testing (for example, FRT) as the simplicity of the system enables collection of vibration data on a periodic basis, a continual basis, and/or a continuous basis. In this regard, based on fleet data obtained corresponding to each respective bladed rotor, an acceptable bladed rotor frequency profile can be determined. In this regard, based on the acceptable bladed rotor frequency profile, a mistuning model that accepts bladed rotor-alone frequency as input perturbations can be developed.

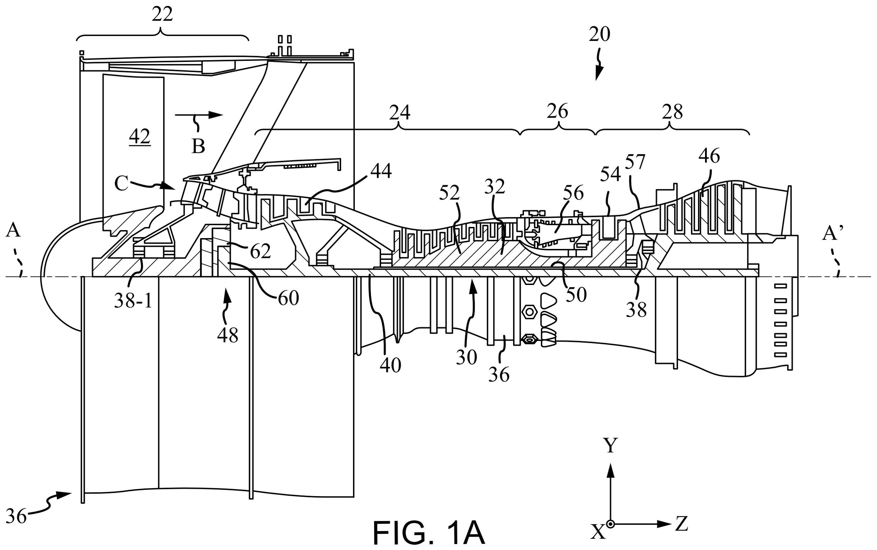

With reference to FIG. 1A, a gas turbine engine 20 is shown according to various embodiments. Gas turbine engine 20 may be a two-spool turbofan that generally incorporates a fan section 22, a compressor section 24, a combustor section 26, and a turbine section 28. In operation, fan section 22 can drive air along a path of bypass airflow B while compressor section 24 can drive air along a core flow path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures, single spool architecture, or any other spool arrangement that may be readily apparent to one skilled in the art.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, etc. Engine central longitudinal axis A-A' is oriented in the Z direction on the provided X-Y-Z axes. It should be understood that various bearing systems 38 at various locations may alternatively or additionally be provided, including for example, bearing system 38, bearing system 38-1, etc.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples' inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

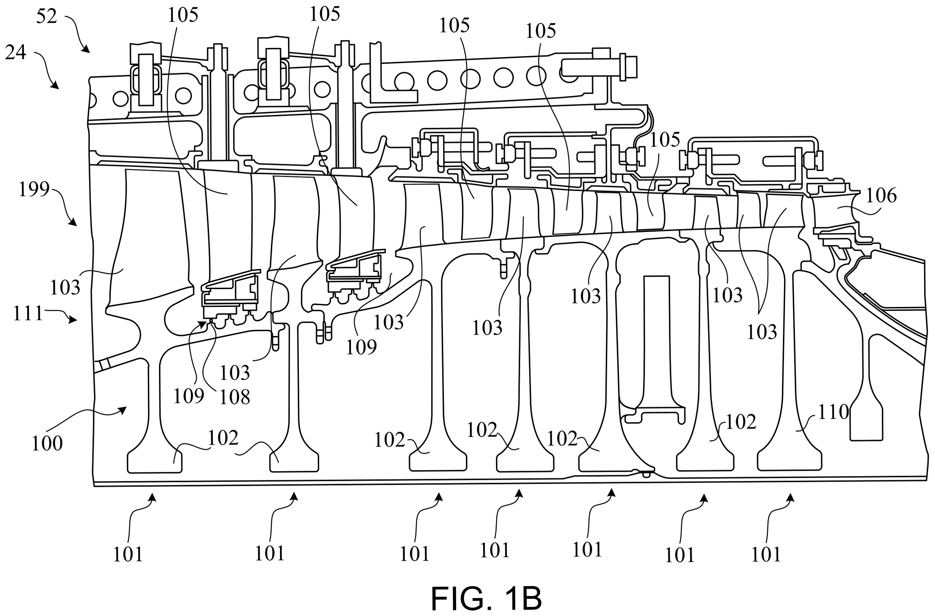

In various embodiments, and with reference to FIG. 1B, high pressure compressor 52 of the compressor section 24 of gas turbine engine 20 is provided. The high pressure compressor 52 includes a plurality of blade stages 101 (i.e., rotor stages or "rotor stack) and a plurality of vane stages 105 (i.e., stator stages). The blade stages 101 may each include an integrally bladed rotor ("IBR") 100, such that the blades 103 and rotor disks 102 are formed from a single integral component (i.e., a monolithic component formed of a single piece). Although described herein with respect to an IBR 100, the present disclosure is not limited in this regard. For example, the inspection, analysis, and repair systems disclosed herein can be utilized with bladed rotors formed of separate blades 103 and rotor disks 102 and still be within the scope of this disclosure. In various embodiments, the plurality of blade stages 101 of a respective compressor section 24 form a rotor stack 199.

The blades 103 extend radially outward from the rotor disk 102. The gas turbine engine 20 may further include an exit guide vane stage 106 that defines the aft end of the high pressure compressor 52. Although illustrated with respect to high pressure compressor 52, the present disclosure is not limited in this regard. For example, the low pressure compressor 44 may include a plurality of blade stages 101 and vane stages 105, each blade stage in the plurality of blade stages 101 including the IBR 100 and still be within the scope of this disclosure. In various embodiments, the plurality of blade stages 101 form a stack of IBRs 110, which define, at least partially, a rotor module 111 of the high pressure compressor 52 of the gas turbine engine 20.

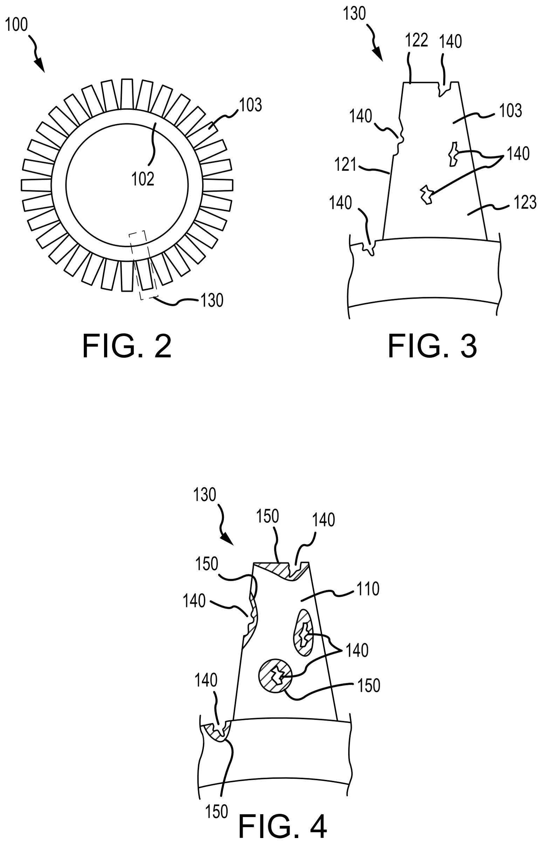

Referring now to FIG. 2, a front view of an IBR 100 is illustrated, in accordance with various embodiments. The IBR 100 includes a rotor disk 102 and a plurality of blades 103 extending radially outward from the rotor disk 102.

When debris is ingested into the gas turbine engine 20, the debris can pass into the primary flowpath. Due to the rotation of the blades 10 in the primary flowpath, the debris can contact one or more of the blades 103. This contact can cause damage or wear to a blade 103, or a set of the blades 103. Disclosed herein are systems and methods for inspection, analysis, and repair of an IBR 100 and for returning an IBR 100 back to service after use. The systems and methods disclosed herein facilitate faster dispositions the more the process is utilized. In this regard, the systems and methods disclosed herein provide a feedback system for continuous improvement of the repair process, in accordance with various embodiments.

With combined reference to FIGs. 2 and 3, a damaged portion 130 from FIG. 2 of an IBR 100 including a substantial number of defects 140 (e.g., damage, wear, etc.) resulting from use of the IBR 100 in the gas turbine engine 20 from FIG. 1A over time. The size and shape of the defects 140 illustrated in FIG. 3 are exaggerated for illustrative effect. Further, the defects 140 can extend to all the blades 103 of the IBR 100, the rotor disk 102, a set of the blades 103 of the IBR 100, a single blade in the blades 103, or the like.

In order to repair the defect 140, a blending operation can be performed on the IBR 100. A blending operation uses a material removal process, such as milling or computer numerical control (CNC) machining, to remove the damaged portion of the IBR 100 and smooth the resulting voids such that the IBR 100 can be re-introduced into service for further use.

Referring now to FIG. 4, the damaged portion 130 with an additional blending mask 150 applied to each of the locations of the defects 140 is illustrated, in accordance with various embodiments. As with the locations of the defects 140, the blending masks 150 are highly exaggerated in scale for explanatory effect. The blending masks 150 can be physical masking applied to the IBR 100, or shaded colors on computer simulations of the IBR 100. In either case, the blending masks 150 indicate what portions of the material of the blade 103 and / or the rotor disk 102 should be removed in order for the IBR 100 to be suitable for utilization in the gas turbine engine 20 after blending. The blending mask 150 ensures that accurate and consistent blends are made in operations that require or utilize manual removal of material.

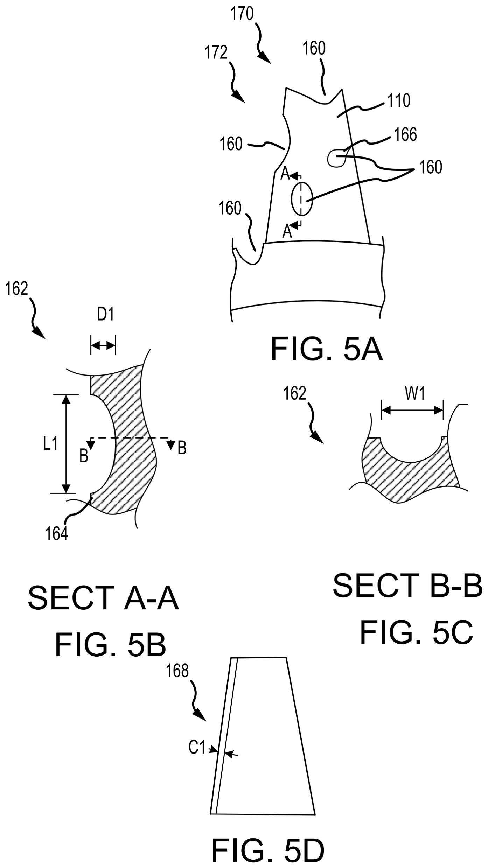

Once the blending mask 150 has been applied, material is removed using the generally manual material removal operation resulting in a repaired blade portion 172 of a repaired IBR 170 including a plurality of repair blend profiles 160, as is illustrated in FIG. 5A.

In various embodiments, each repair blend profile in the plurality of repair blend profiles 160 is based, at least partially, on a defect shape of a respective defect 140 from FIG. 3. In various embodiments, as described further herein, the systems and methods disclosed herein facilitate a greater number of potential blend options for a respective defect 140 from FIG. 3. For example, if a repair blend was too large and fell out of experience based functional criteria, an IBR 100 could be scrapped as opposed to being blended as described further herein and placed back into service.

In various embodiments, explicit instructions are derived from the automated process and supplied to a computer numerical controlled (CNC) machine. In this instance, blending masks may not be utilized as the manual blending operation is replaced by the machine automated process. Blends of IBR 100 can be by either manual or automated processes, or a combination of those processes. In wholly automated processes, the creation of the mask can be omitted.

In addition to removing the locations of the defects 140, it is beneficial to remove material deeper than the observed damage in order to ensure that all damage is removed and to prevent the propagation of new damage. In various embodiments, a blend aspect ratio (e.g., a length - depth ratio) is maintained in order to ensure that there is a smooth and gradual transition from the edge of the undamaged blade 103 to the bottom of the deepest portion of the blend, and then back to the undamaged surface of the blade 103 on the other side of the blend.

Although FIGs. 2-5A illustrated blending solutions applied to the IBR 100 in locations including the rotor disk 102, the blade 103, an edge 121 (e.g., a leading edge or a trailing edge), a tip 122, an airfoil surface 123 (e.g., a pressure surface or a suction surface), it can be appreciated that a repair of each location shown on the same blade 103 is unlikely. The various locations are shown for illustrative purposes of potential repair locations, in accordance with various embodiments. The illustrated defects 140, blending masks 150, and repair blend profiles 160 on the IBR 100 are exemplary of the limited applications and not of every repair made according to the description herein.

In order to assist with the blending process and facilitate efficient determination of acceptability of an IBR 100 to return into service, a semi - automated (or fully automated) system is utilized to inspect, analyze, and repair an IBR 100, in accordance with various embodiments.

In various embodiments, repair blend profiles 160 can include a scallop shape, a tear drop shape, a material reduction along an edge (i.e., chord reduction), or the like. The present disclosure is not limited in this regard.

For example, with reference now to FIGs. 5B, and 5C, a repair blend profile 162 is illustrated. In various embodiments, the repair blend profile comprises a convex shape and defines a recess in an outer surface of the repaired IBR 170 (e.g., a pressure surface, a suction surface, a rotor disk surface, or the like). In various embodiments, the repair blend profile is recessed from the outer surface 164 of the repaired IBR 170. In various embodiments, the repair blend profile 162 comprises a depth D1, a length L1 and a width W1. In various embodiments, the repair blend has a length L1 that is greater than a width W1. However, the present disclosure is not limited in this regard. For example, the length L1 can be equal to the width W1, in accordance with various embodiments. An aspect ratio of a blend profile, as referred to herein, refers to a length L1 dived by a width W1 of the repair blend profile. In various embodiments, the repair blend profile is substantially symmetric about a plane defined by a first point, a second point and a third point. The first point can be a max depth location. The second point and the third point can define a line that measures a maximum length (e.g., length L1) of the repair blend, in various embodiments. In various embodiments, the second point and the third point can define a line that measures a width in a perpendicular direction from the length L1. The present disclosure is not limited in this regard. As referred to herein, "substantially symmetrical" is a first profile on a first side of the plane that is within a profile of between 0.01 inches (0.025 cm) and 0.25 inches (0.64 cm) from the second profile on the second side of the plane, or between 0.01 inches (0.025 cm) and 0.125 inches (0.32 cm), or between 0.01 inches (0.25 cm) and 0.0625 inches (0.16 cm).

Although described herein as being substantially symmetrical, the present disclosure is not limited in this regard. For example, the repair blend profile can comprise a tear drop shape (e.g., repair blend profile 166 from FIG. 5B), a chord reduction (i.e., shorting a chord length by a chord reduction length C1 along a span of the blade 103 of the repaired IBR 170 as shown in FIG. 5D), or the like. The present disclosure is not limited in this regard.

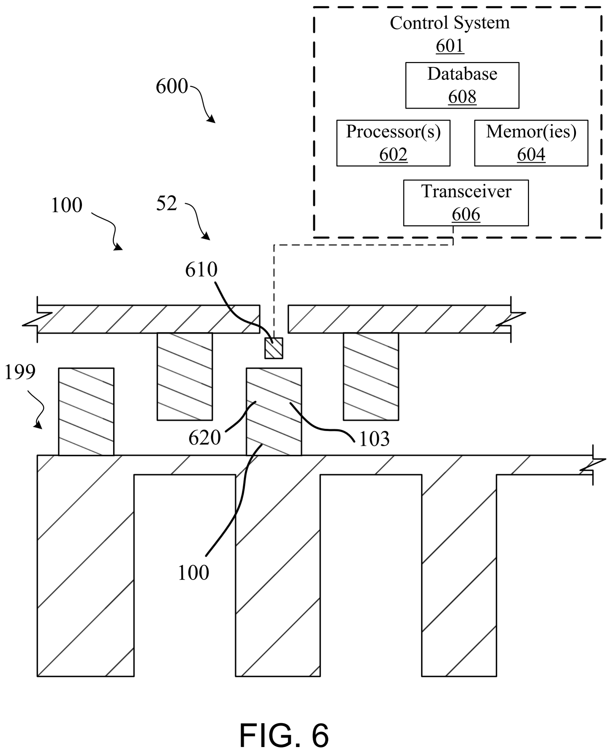

Referring now to FIG. 6, a cross-sectional view of a portion of a compressor section 24 of a gas turbine engine 20 prior to performing vibrational testing for detection of damage (for example, performing FRT) is illustrated in accordance with various embodiments. In various embodiments, prior to performing vibrational testing (for example, a FRT) on the gas turbine engine 20, a vibration data collection system 600 can be configured with the compressor section in-situ (while engine may be removed for testing, removal is not necessary for the disclosed process). For example, one or more devices 610 can be installed within the compressor section 24 proximate an IBR 100 of interest, each and every IBR in a rotor stack 199, a select number of IBRs in the rotor stack 199, or any other configuration that may be readily apparent to one skilled in the art. In various embodiments, the one or more devices 610 can be components of the gas turbine engine 20. In this regard, the vibrational testing method could be performed on wing if desired, in accordance with various embodiments. In various embodiments, the vibration data collection system is configured at a respective maintenance interval (e.g., when the gas-turbine engine 20 is removed from the wing of an aircraft but the rotor stack 199 is still installed within the gas turbine engine 20. Stated another way, the rotor stack 199 can be tested for damage in-situ, in accordance with various embodiments. While this disclosure may specifically discuss FRT as an example of a vibrational testing method, it should be understood that other vibrational testing methods may be employed.

In various embodiments, the vibration data collection system 600 can be integrated with a gas turbine engine testing system. Stated another way, the vibration data collection system 600 may initiate vibration of or within the gas turbine engine 20 in order to complete testing of the IBR 100 in the rotor stack 199, in accordance with various embodiments. However, the present disclosure is not limited in this regard. For example, the vibration data collection system 600 can be separate and distinct relative to an engine testing system and would still be within the scope of this disclosure. In this regard, the vibration data collection system 600 can be configured to capture data (e.g., vibration data), whereas an engine testing system can be configured to operate the gas turbine engine to activate the rotor stack 199. In various embodiments, instead of an engine testing system, the vibration data collection system 600 may operate independently from the command and control system of an aircraft to initiate the testing. In this regard, the gas turbine engine 20 could remain on the wing of an aircraft during performance of the vibration testing described further herein and would still be within the scope of this disclosure.

The data collection system 601 may be integrated into computer system of the vibration data collection system 600 (e.g., in one or more processors 602 and/or one or more memories 604). In various embodiments, the data collection system 601 may be configured as a central network element or hub to various systems and components of the vibration data collection system 600. In various embodiments, data collection system 601 may comprise one or more processors 602. In various embodiments, data collection system 601 may be implemented with a single controller (e.g., via a single processor in the one or more processors 602 and associated memory in the one or more memories 604). In various embodiments, data collection system 601 may be implemented as multiple processors (e.g., a main processor and local processors in the one or more processors 602 for various components). The one or more processors 602 in the data collection system 601 can include a general purpose processor, a digital signal processor (DSP), an application specific integrated circuit (ASIC), a field programable gate array (FPGA), or other programable logic device, discrete gate or transistor logic, discrete hardware components, or any combination thereof. The one or more processors 602 in the data collection system 601 may comprise a processor configured to implement various logical operations in response to execution of instructions, for example, instructions stored on a non-transitory, tangible, computer-readable medium configured to communicate with the data collection system 601.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

In various embodiments, the data collection system 601 comprises the one or more processors 602, the one or more memories, a database 608, and a transceiver 606 (or a receiver). In various embodiments, the transceiver 606 is in electronic (e.g., wireless) communication with one or more devices 610. In this regard, the one or more devices 610 is/are configured to record vibration data corresponding to a bladed rotor (e.g., IBR 100) in a rotor stack 199, as described further herein.

In various embodiments, the database 608 can store vibration data collected in flight of a respective bladed rotor (e.g., IBR 620) in the rotor stack 199. In this regard, the vibration data can be utilized as an input into mistuning models as described further herein, in accordance with various embodiments.

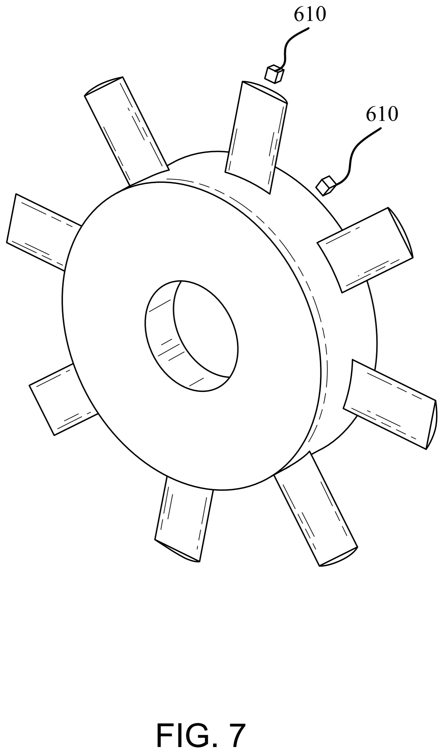

In various embodiments, each of the one or more devices 610 can be installed proximate the blades 103 of an IBR of interest (e.g., IBR 620). In this regard, a first of the one or more devices 610 can be installed radially outward from the blades 103 of the IBR 620 when performing a vibration test in-situ (i.e., with the rotor stack 199 installed on the gas turbine engine 20). However, the present disclosure is not limited in this regard. For example, with brief reference to FIG. 7, when utilizing FRT during a bench test, the one or more devices 610 can be installed aft or forward from the IBR 620 and would still be within the scope of this disclosure.

In various embodiments, each of the one or more devices 610 comprises one or more piezoelectric transducers (e.g., a lead zirconate titanate (PZT) transducer), piezoelectric sensors (which may be separate from or integral to the piezoelectric transducer), and a network embedded system ("NEST") operably coupled to the one or more piezoelectric transducers. In various embodiments, each of the one or more devices 610 can comprise a set of piezoelectric transducers (e.g., two or more piezoelectric transducers) coupled to a NEST. In various embodiments, the piezoelectric transducers may be disposed in various arrangements and at various locations of the IBR 620. The piezoelectric transducers may convert mechanical energy at specified frequencies. The piezoelectric transducers may be tuned as desired. The NEST is configured to receive vibration data corresponding to an IBR of interest (e.g., IBR 620) via the piezoelectric sensors. In this manner, the piezoelectric transducers may initiate vibrations to the IBR 620 such that the NEST may sense and collect the vibrational response data of the IBR 620. In various embodiments, the vibration data collection system 600 can comprise a NEST corresponding to each IBR in a rotor stack 199, a NEST corresponding to an entire rotor stack 199, or a NEST corresponding to each of the one or more piezoelectric transducers in the one or more devices 610. The present disclosure is not limited in this regard.

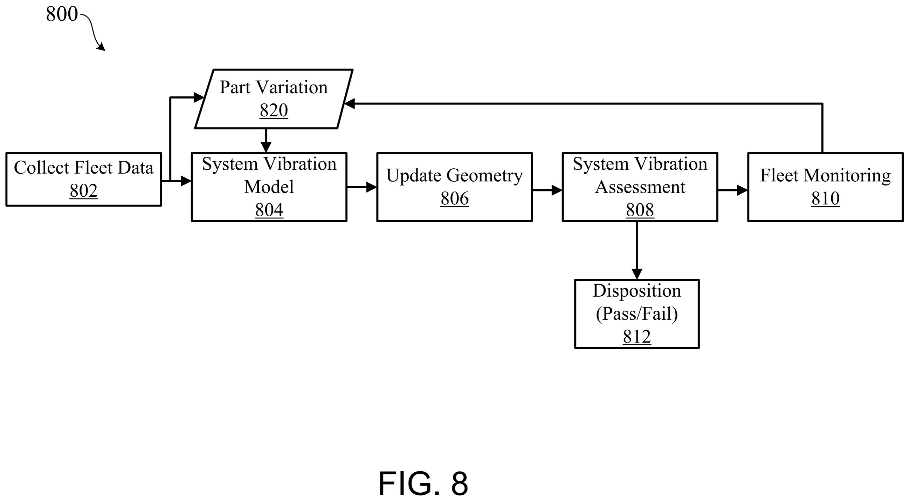

Referring now to FIG. 8, a process 800 for utilizing fleet vibration data for efficient disposition of potential bladed rotor repairs is illustrated, in accordance with various embodiments. The process 800 comprises collecting fleet data for a bladed rotor (e.g., IBR 620 from FIG. 6) (step 802). In various embodiments, the process 800 can be performed for each bladed rotor in a respective rotor stack 199. In this regard, a disposition and/or repair process for blades of each bladed rotor in a rotor stack 199 from FIG. 6 can be made more efficient as described further herein.

"Fleet data" as referred to herein includes vibration data sets as measured from the one or more devices 610 from FIG. 6 for a plurality of gas-turbine engines that has entered services. The fleet data can include a normalized frequency for each blade in a bladed rotor (e.g., IBR 620 from FIG. 6). In various embodiments, the fleet data includes the normalized frequency for each blade in a bladed rotor across a set number of gas-turbine engines (e.g., across 10 gas-turbine engines, or across 50 gas-turbine engines, or across 100 gas-turbine engines, or across 1,000 or more gas-turbine engines). The present disclosure is not limited in this regard. Based on the fleet data, a distribution of normalized frequency for each blade in the bladed rotor can be determined. A "normalized frequency" as referred to herein is an actual natural frequency of a respective blade in the bladed rotor divided by a theoretical natural frequency corresponding to a blade of nominal dimensions (i.e., a blade manufactured without any deviation from the nominal dimensions of the blade). A "normalized frequency" as used herein may also be a percent deviation calculated as the frequency difference between the respective and ideal blade divided by the model-based frequency. Based on the distribution of normalized frequency for each blade in a bladed rotor, an impact on a system vibration amplitude from a change in normalized frequency of a blade in a bladed rotor can be modeled and quantified as described further herein. Stated another way, the fleet data can include blade specific frequencies and a system vibration amplitude that corresponds to those specific blade specific frequencies. Accordingly, based on the blade specific frequencies and the system vibration amplitude, a torque amplification factor as a function of frequency shift can be determined for each blade in a bladed rotor, in accordance with various embodiments.

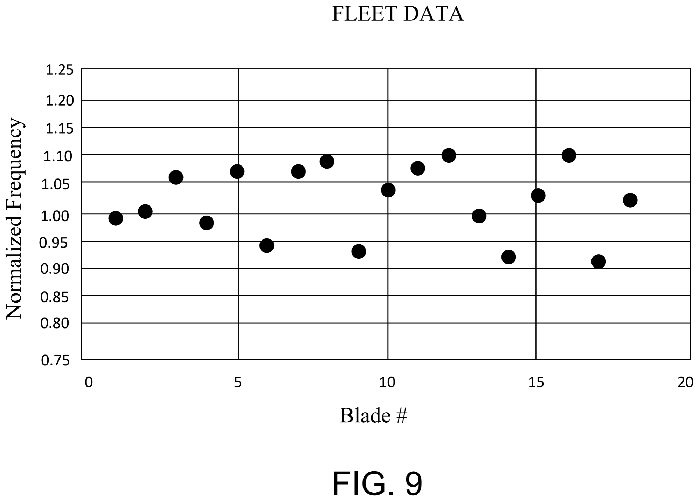

With brief reference to FIG. 9, based on the fleet data, the normalized frequency for each blade in a specific bladed rotor is illustrated, in accordance with various embodiments. As shown, blades number 1, 2, and 13 have normalized frequencies near 1 indicating a strong correlation to an ideal blade. An "ideal" blade is a blade of nominal dimensions. "Nominal" dimensions as referred to herein includes the dimensions corresponding to the design of the bladed rotor (e.g., if a manufactured blade was the exact dimensions of a design drawing for the blade) or the as-manufactured geometry used for initial certification of a component. Stated another way, a normalized frequency of exactly 1 would correspond to a blade in operation that generates a frequency response that is identical to a theoretical frequency response of a three-dimensional model of the blade with nominal dimensions as determined by a modal analysis. Although FIG. 9 only illustrates fleet data corresponding to a single bladed rotor in operation, it is understood fleet data may be collected and analyzed for numerous bladed rotors.

In this regard, data corresponding to each blade in a bladed rotor can be compiled and used for determining repair blend profiles and dispositioning whether the repair blend profiles are acceptable to re-enter the bladed rotor back into service, in accordance with various embodiments.

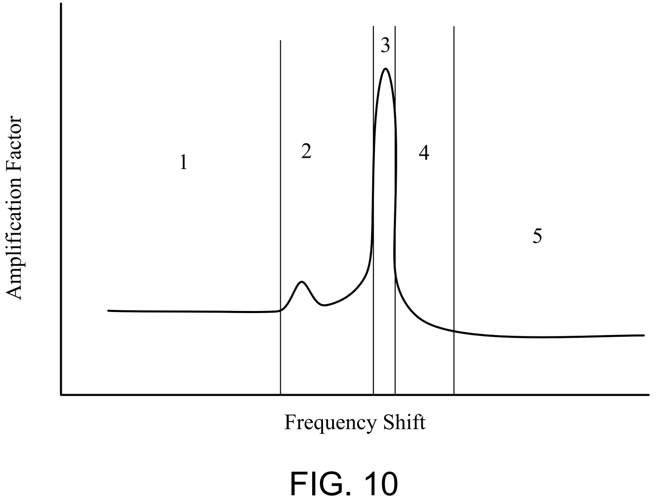

Referring back to FIG. 8, the process 800 further comprises inputting the fleet data collected in step 802 into a system vibration model (step 804). With brief reference now to FIG. 10, the system vibration model is developed to correlate a system vibration amplitude (i.e., a Tuned Absorber Factor ("TAF") and/or Mistuning Amplification Factor (MAF)) to a frequency shift of an ideal blade for each mode within a modal domain. In various embodiments, the modal domain can be determined by an operating range of the gas turbine engine (e.g., within an operating range plus or minus a respective tolerance, or any other modal domain that may be readily apparent to one skilled in the art). As shown in FIG. 10, as a frequency of a blade shifts relative to a reference frequency, the system vibration amplitude (e.g., the TAF and/or MAF) can be impacted moderately (e.g., in zones 2 and 4), negligibly (e.g., in zones 1 and 5), or potentially substantially (e.g., in zone 3). In this regard, the system vibration model in step 804 can quantify and predict how a frequency shift of a blade in a bladed rotor will affect a system vibration for each mode in a modal domain of a bladed rotor, in accordance with various embodiments.

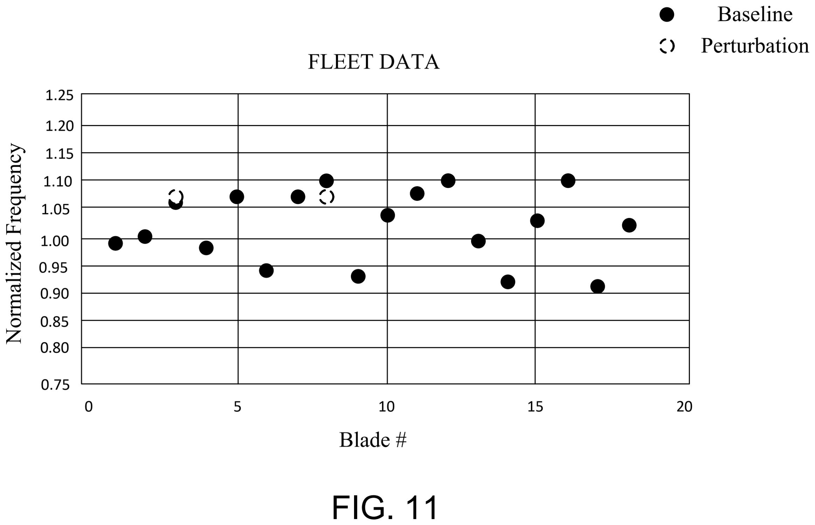

Referring back to FIG. 8, the process 800 can further comprise updating a geometry of a bladed rotor in step 806. In various embodiments, based on having one or more repair blend profiles (e.g., as shown in FIGs. 5A-5D), a natural frequency of the blade with the one or more repair blend profiles can be shifted relative to a reference natural frequency (i.e., the ideal blade). In this regard, a perturbation (e.g., a shift in the normalized frequency) of each blade can be determined based on this shift in frequency relative to the ideal blade. This perturbation can be determined by performing a model analysis on a model of the blade with the one or more repair blend profiles. Once the perturbation is determined, a change in normalized frequency relative to the blade in operation can be determined. For example, blade 8 in the fleet data from FIG. 11 has a normalized frequency of 1.10. In various embodiments, a modal analysis of a model of blade 8 with one or more repair blend profiles reduces the natural frequency of blade 8 by 3% relative to the ideal bladed rotor. Then, the perturbation would be 0.33 less than the normalized frequency of blade 8 that is being analyzed (e.g., 1.067). This perturbation can be utilized in a developed model and perform a system vibration assessment in step 808 of process 800 from FIG. 8.

Stated another way, the updated geometry in step 806 can correspond to how a change in geometry of a respective blade from the bladed rotor is predicted to impact the normalized frequency from the fleet data collected in step 802. For example, with brief reference to FIG. 11, a plot of a baseline fleet data for each blade in a bladed rotor relative to estimated perturbations from the baseline data for blade number 3 and blade number 8 from repairing blade number 3 and blade number 8 with one or more repair blend profiles (e.g., as shown in FIGs. 5A-D) is illustrated, in accordance with various embodiments.

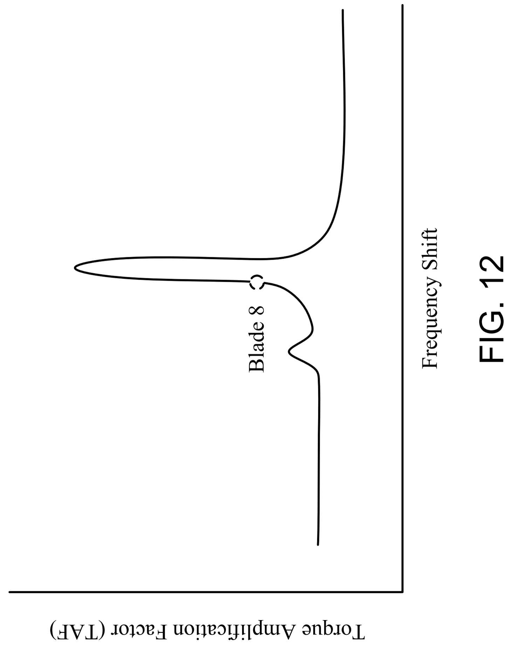

With reference back to FIG. 8, for each blade that is planned to be repaired (e.g., with one or more repair blend profiles as shown in FIG. 8), a system vibration assessment 808 can be performed on the potential repaired blade. For example, with reference now to FIG. 12, the system vibration amplitude of the blade 8 can be plotted as a function of frequency shift based on the fleet data from FIG. 9 and the perturbation of blade 8 caused by the one or more repair blend profiles as shown in FIG. 11. In this regard, based on the system vibration amplitude caused by the respective frequency shift, the potential repaired blade can be dispositioned as either acceptable or unacceptable. If the potential repaired blade is deemed acceptable, the blade can be repaired in accordance with the one or more potential repair blend profiles and re-enter service. In this regard, in step 810, the fleet data for the respective bladed rotor with blade 8 can be updated to reflect the updated normalized frequency of the repaired blade (e.g., in step 820). In this regard, for future system vibration models in step 804 for the blade that has the repaired blade 8 back in service, the part variation in step 820 can be accounted for, in accordance with various embodiments.

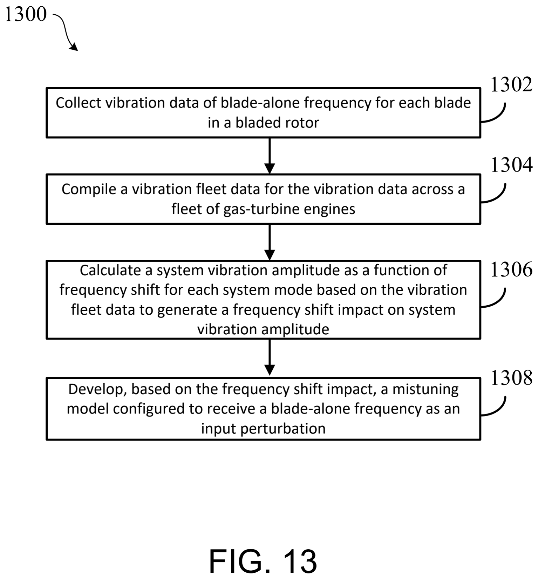

Referring now to FIG. 13, a method 1300 for developing a mistuning model to facilitate dispositions of potential repair blend profiles on damaged blades of a bladed rotor is illustrated, in accordance with various embodiments. In various embodiments, the method comprises: collecting a vibration data, the vibration data comprising blade-alone frequency for each of a plurality of blades in the bladed rotor on a gas-turbine engine (step 1302), compiling the vibration data with vibration data sets across a fleet of gas-turbine engines to generate a vibration fleet data (step 1304), calculating a system vibration amplitude as a function of frequency shift for each of a plurality of system modes based on the vibration fleet data to generate a frequency shift impact on the system vibration amplitude (step 1306), and developing, based on the frequency shift impact, the mistuning model, the mistuning model configured to receive a blade-alone frequency parameter as an input perturbation (step 1308).

In various embodiments, the vibration data is collected via one or more piezoelectric sensors disposed proximate the bladed rotor in the gas-turbine engine during testing of the gas-turbine engine. In various embodiments, a Frequency Resonance Testing (FRT) is performed for each blade in the bladed rotor during testing of the gas-turbine engine to generate the vibration data for each of the plurality of blades in the bladed rotor. FRT may include collecting data from piezoelectric transducers to determine vibration or resonance frequency patterns. FRT may detect small changes in a part's vibration response used to identify instances of damage on an IBR. Damage may be due to, for example, foreign object debris (FOD) on a part. FRT then statistically scores the resonance frequency patterns to identify potential defects or outliers in the blades of rotor systems. FRT analysis may be a relatively quick and efficient testing process, taking less than 15 seconds per blade. In various embodiments, the compiling the vibration data comprises calculating a normalized frequency for each of the plurality of blades in the bladed rotor relative to an ideal blade. In various embodiments, the normalized frequency for each of the plurality of blades corresponds to a data-based frequency of the respective blade divided by a model-based frequency of the ideal blade. In various embodiments, responsive to the mistuning model receiving the blade-alone frequency as the input perturbation, the mistuning model generates a predicted frequency shift impact on the system vibration amplitude for each of the plurality of system modes in a modal domain of the bladed rotor.

In various embodiments, the system vibration amplitude as a function of the frequency shift impact for each of the plurality of system modes is calculated for each of the plurality of blades in the bladed rotor. In various embodiments, the vibration fleet data includes a normal distribution of normalized frequency for each of the plurality of blades.

In various embodiments, as described further herein, FRT can be utilized to identify damage on airfoil surfaces of bladed rotors that are either (1) installed on an engine as an assemblage of multiple bladed rotors; (2) removed from an engine as an assemblage of multiple bladed rotors; or (3) as a single bladed rotor removed from an engine and removed from the rotor stack. The present disclosure is not limited in this regard. In various embodiments, by being able to analyze the bladed rotors while still assembled on the engine, dispositions on damage can be made without having to disassemble the engine to access the bladed rotor, which can result in significant time savings, in accordance with various embodiments.

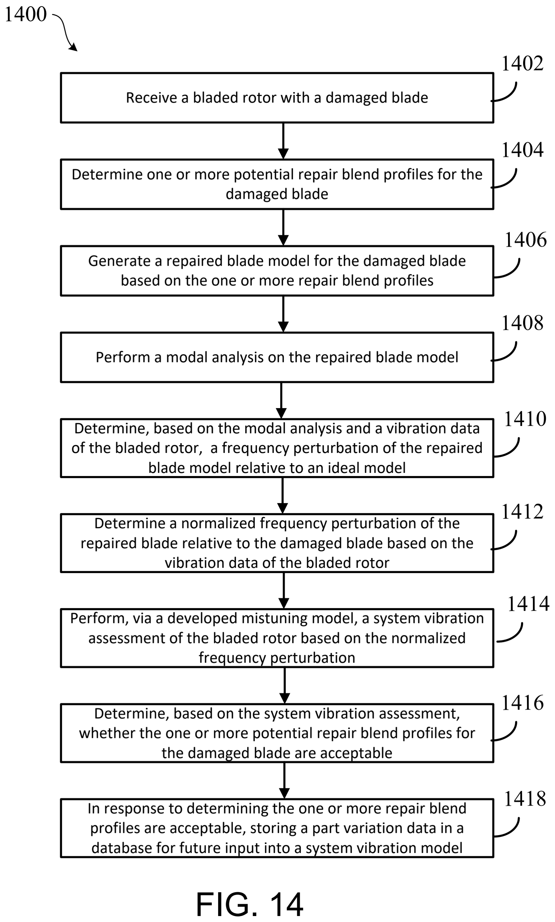

Referring now to FIG. 14, a method 1400 for determining whether one or more potential repair blend profiles for a potentially repaired blade on a bladed rotor is acceptable is illustrated in accordance with various embodiments. The method 1400 comprises receiving a bladed rotor with a damaged blade (step 1402). In various embodiments, the bladed rotor is received at a maintenance facility at a set maintenance interval or directly after damage of a blade is determined (e.g., if damage is detected by a monitoring system or the like). The resent disclosure is not limited in this regard.

In various embodiments, the method 1400 further comprises determining one or more potential repair blend profiles for the damaged blade of the bladed rotor (step 1404), generate a repaired blade model for the damaged blade based on the one or more repair blend profiles (step 1406), and performing a modal analysis of the repaired blade model, the repaired blade model include a repair blend feature for each of the one or more potential repair blend profiles (step 1408). In this regard, based on each specific type of damage, a potential repair blend profile (e.g., as shown in FIGs. 5A-D) can be determined. The potential repair blend profile can be modeled in a three-dimensional modeling software, such as Solidworks^{®} or Unigraphics NX, and a modal analysis can be performed in a simulation software, such as ANSYS^{®}.

In various embodiments, the method 1400 further comprises determining, based on the modal analysis and a vibration data of the bladed rotor from operation of a gas-turbine engine over numerous flight cycles, a frequency perturbation of a repaired blade model relative to an ideal blade model, the repaired blade model corresponding to the potentially repaired blade (step 1410). In this regard, the impact of the potential repair blend profile on the frequency of the damaged blade can be determined and quantified.

In various embodiments, the method further comprises determining a normalized frequency perturbation of the repaired blade model relative to a damaged blade on a fleet vibration data of a fleet of bladed rotors that include the bladed rotor (step 1412). Accordingly, based on the fleet vibration data, a normalized frequency perturbation of the repaired blade can be calculated and used as an input in a developed mistuning model as described previously herein.

In various embodiments, the method 1400 further comprises performing, via a developed mistuning model, a system vibration assessment of the bladed rotor based on the normalized frequency perturbation (step 1414), and determining, based on the system vibration assessment, whether the one or more potential repair blend profiles of the potentially repaired blade on the bladed rotor is acceptable (step 1416). In this regard, a disposition of potential repair blend profiles and/or potential repaired blades can be made efficiently and quickly relative to typical disposition systems known in the art.

In various embodiments, the method 1400 further comprises in response to the determining the one or more potential repair blend profiles are acceptable, storing a part variation data in a database for future input into a system vibration model (step 1418). In various embodiments, in response to the determining the one or more potential repair blend profiles are acceptable, repairing the damaged blade with the one or more potential repair blend profiles to form a repaired blade corresponding to the repaired blade model.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, any of the above-described concepts can be used alone or in combination with any or all the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible considering the above teaching.

## Claims

1. A method for developing a mistuning model to facilitate dispositions of potential repair blend profiles on damaged blades of a bladed rotor, the method comprising:
collecting a vibration data, the vibration data comprising blade-alone frequency for each of a plurality of blades in the bladed rotor on a gas-turbine engine;
compiling the vibration data with vibration data sets across a fleet of gas-turbine engines to generate a vibration fleet data;
calculating a system vibration amplitude as a function of frequency shift for each of a plurality of system modes based on the vibration fleet data to generate a frequency shift impact on the system vibration amplitude; and
developing, based on the frequency shift impact, the mistuning model, the mistuning model configured to receive a blade-alone frequency parameter as an input perturbation.

2. The method of claim 1, wherein the vibration data is collected via one or more piezoelectric sensors disposed proximate the bladed rotor.

3. The method of claim 1 or 2, wherein a Frequency Resonance Testing (FRT) is performed for each blade in the bladed rotor to generate individual vibration data for each of the plurality of blades in the bladed rotor.

4. The method of claim 1, 2 or 3, wherein the compiling the vibration data comprises calculating a normalized frequency for each of the plurality of blades in the bladed rotor relative to an ideal blade.

5. The method of claim 4, wherein the normalized frequency for each of the plurality of blades corresponds to a data-based frequency of the respective blade divided by a model-based frequency of the ideal blade.

6. The method of any preceding claim, wherein responsive to the mistuning model receiving the blade-alone frequency as the input perturbation, the mistuning model generates a predicted frequency shift impact on the system vibration amplitude for each of the plurality of system modes in a modal domain of the bladed rotor.

7. The method of any preceding claim, wherein the system vibration amplitude as a function of the frequency shift impact for each of the plurality of system modes is calculated for each of the plurality of blades in the bladed rotor.

8. The method of claim 7, wherein the vibration fleet data includes a normal distribution of normalized frequency for each of the plurality of blades.

9. A method for determining whether one or more potential repair blend profiles for a potentially repaired blade on a bladed rotor is acceptable, the method comprising:
determining, based on a vibration data of the bladed rotor from operation of a gas-turbine engine over numerous flight cycles, a frequency perturbation of a repaired blade model relative to an ideal blade model, the repaired blade model corresponding to the potentially repaired blade;
determining a normalized frequency perturbation of the repaired blade model relative to a damaged blade based on a fleet vibration data of a fleet of bladed rotors that include the bladed rotor;
performing, via a developed mistuning model, a system vibration assessment of the bladed rotor based on the normalized frequency perturbation; and
determining, based on the system vibration assessment, whether the one or more potential repair blend profiles of the potentially repaired blade on the bladed rotor is acceptable.

10. The method of claim 9, wherein prior to the determining the frequency perturbation of the repaired blade model relative to the ideal blade model, the method further comprises:
determining the one or more potential repair blend profiles for the damaged blade of the bladed rotor; and
performing a modal analysis of the repaired blade model, the repaired blade model include a repair blend feature for each of the one or more potential repair blend profiles.

11. The method of claim 10, further comprising determining the one or more potential repair blend profiles for the damaged blade prior to performing the modal analysis.

12. The method of claim 11, further comprising generating the repaired blade model for the damaged blade based on the one or more potential repair blend profiles.

13. The method of any of claims 9 to 12, wherein in response to the determining the one or more potential repair blend profiles are acceptable, storing a part variation data in a database for future input into a system vibration model.

14. The method of any of claims 9 to 13, wherein in response to the determining the one or more potential repair blend profiles are acceptable, repairing the damaged blade with the one or more potential repair blend profiles to form a repaired blade corresponding to the repaired blade model.

15. The method of any of claims 9 to 14, wherein the developed mistuning model is developed by the method of any of claims 1 to 8.
